# EUROPÄISCHE PATENTSCHRIFT

(11) **EP 2 764 464 B1**
(45) Veröffentlichungstag und Bekanntmachung des Hinweises auf die Patenterteilung: **28.11.2018**
(21) Anmeldenummer: 12777857.9
(22) Anmeldetag: 04.10.2012
(51) Int. Cl.: G06F 9/54, G06F 21/53, G06F 21/57

(54) **MIKROPROZESSORSYSTEM MIT GESICHERTER LAUFZEITUMGEBUNG**
MICROPROCESSOR SYSTEM WITH SECURED RUNTIME ENVIRONMENT
SYSTÈME À MICROPROCESSEUR PRÉSENTANT UN ENVIRONNEMENT D'EXÉCUTION SÉCURISÉ

(30) Priorität: 07.10.2011 DE 102011115135
(43) Veröffentlichungstag der Anmeldung: 13.08.2014
(73) Patentinhaber: Trustonic Limited, Cambridge CB1 2JD (GB)
(72) Erfinder: SPITZ, Stephan, 85757 Karlsfeld (DE); KÖHLER, Markus, 81739 München (DE); MARTINI, Ullrich, 81669 München (DE)
(74) Vertreter: D Young & Co LLP
(86) Internationale Anmeldenummer: PCT/EP2012/004159
(87) Internationale Veröffentlichungsnummer: WO 2013/050154

(56) Entgegenhaltungen:
- US-A1- 2005 033 972
- WEI HUANG ET AL: "Virtual machine aware communication libraries for high performance computing", PROCEEDINGS OF THE 2007 ACM/IEEE CONFERENCE ON SUPERCOMPUTING, 2007, SC'07 : DATE: 10 - 16 NOV. 2007, RENO, NV, USA, IEEE, PISCATAWAY, NJ, USA, 10. November 2007 (2007-11-10), Seiten 1-12, XP031577205, ISBN: 978-1-59593-764-3
- ARM LIMITED: "ARM Security Technology - Building a Secure System using TrustZone Technology", INTERNET CITATION, 30. April 2009 (2009-04-30), Seiten I-XII,1, XP002660015, Gefunden im Internet: URL:http://infocenter.arm.com/help/topic/c om.arm.doc.prd29-genc-009492c/PRD29-GENC-0 09492C_trustzone_security_whitepaper.pdf [gefunden am 2011-09-27]
- GIESECKE & DEVRIENT: "Mobicore - Giesecke & Devrient's Secure OS for ARM TrustZone Technology (White Paper)", INTERNET CITATION, 1. Januar 2010 (2010-01-01), Seiten 1-8, XP002688064, Gefunden im Internet: URL:http://www.gi-de.com/gd_media/media/en /documents/brochures/mobile_security_2/Mob iCore_EN.pdf [gefunden am 2012-11-27]

## Beschreibung

Die Erfindung betrifft ein in einem mobilen Endgerät implementierbares oder implementiertes Mikroprozessorsystem mit einer gesicherten Laufzeitumgebung.

Ein Mikroprozessorsystem umfasst einen Mikroprozessor und ein oder mehrere flüchtige und nichtflüchtige Speicher, in funktioneller Sichtweise insbesondere zumindest einen Betriebssystemspeicher, in dem ein Betriebssystem abgespeichert ist, ein oder mehrere Applikationsspeicher, in denen durch den Mikroprozessor unter Steuerung des Betriebssystems ausführbare Applikationen abgespeichert sind, und einen Arbeitsspeicher, in dem durch den Mikroprozessor zu bearbeitende Daten ablegbar sind. Das Betriebssystem erzeugt und unterhält während seines Betriebs eine Laufzeitumgebung, in der die Applikationen auf dem Mikroprozessorsystem lauffähig sind. Das Mikroprozessorsystem ist in der Regel auf einem Chip, z.B. Halbleiterchip, implementiert, eventuell auch auf mehreren verbunden Chips.

Unter einem mobilen Endgerät wird ein Mobiltelefon, Smartphone, PDA (Personal Digital Assistant) oder ähnliches Endgerät verstanden.

Unter der Bezeichnung ARM Trustzone Architektur ist eine zweigeteilte Laufzeit-Architektur der Firma ARM für ein Mikroprozessorsystem bekannt, die zwei Laufzeitumgebungen umfasst. Eine erste, "Normal Zone" oder "Normal World" genannte unsichere Laufzeitumgebung ist durch ein Normalbetriebssystem gesteuert. Eine zweite, "Trustzone" oder "Trusted World" oder "Secure World" genannte gesicherte oder vertrauenswürdige Laufzeitumgebung ist durch ein Sicherheitsbetriebssystem gesteuert.

Das Normalbetriebssystem kann beispielsweise ein gängiges Betriebssystem wie Android, Windows Phone, Symbian oder dergleichen sein.

Durch die Anmelderin der vorliegenden Patentanmeldung wird unter der Markenbezeichnung MOBICORE ein Sicherheitsbetriebssystem für in mobile Endgeräte zu implementierende Chips hergestellt und vertrieben. Insbesondere sicherheitskritische Applikationen und manche Peripherie-Funktionen (z.B. Tastaturtreiber) werden durch das Sicherheitsbetriebssystem MOBICORE auf sichere Weise gesteuert. Applikationen unter dem Sicherheitsbetriebssystem werden auch als Trustlets bezeichnet, in Anlehnung an die Begriffe "Trust" (Vertrauen) und "Applet". Weitere Applikationen und andere Peripherie-Funktionen (z.B. Display treiber, NFC-SchnittstellenTreiber, Radio Interface Layer RIL) werden durch das Normalbetriebssystem (auch Rich OS oder HLOS genannt) gesteuert. Das Sicherheitsbetriebssystem umfasst einen kryptographischen Schlüssel, den Authentisierungsschlüssel Kauth, mittels dessen sich das Sicherheitsbetriebssystem gegenüber einem Hintergrundsystem identifizieren kann. Wahlweise ist der Authentisierungsschlüssel Kauth zusätzlich zum Betreiben eines sicheren Kommunikationskanals zwischen dem Chip bzw. Mobilendgerät und dem Hintergrundsystem vorgesehen. Das Hintergrundsystem ist beispielsweise ein an sich bekanntes Hintergrundsystem eines Mobilfunknetzes.

Zugriffe des Normalbetriebssystems aus der unsicheren Laufzeitumgebung in die gesicherte Laufzeitumgebung, z.B. zum Aufruf einer Applikation in der gesicherten Laufzeitumgebung (Trustlet), oder zum Austausch von Daten, erfolgen standardmäßig ausschließlich über einen innerhalb der unsicheren Laufzeitumgebung implementierten, aber durch das Sicherheitsbetriebssystem kontrollierten und auf Betriebssystemebene funktionierenden Sicherheitstreiber, z.B. Mobicore-Treiber. Der Sicherheitstreiber kann z.B. Aufgaben des Normalbetriebssystems an das Sicherheitsbetriebssystem abtreten und durch das Sicherheitsbetriebssystem bereitgestellte Ergebnisse zu Aufgaben an das Normalbetriebssystem weiterleiten. Der Sicherheitstreiber vermittelt einen gesicherten Kommunikationskanal zwischen dem Normalbetriebssystem und dem Sicherheitsbetriebssystem, der für den Austausch kleinerer Datenmengen völlig ausreichend ist.

Auf eine in der gesicherten Laufzeitumgebung implementierte Applikation (Trustlet) oder Peripherie-Funktion ist ein Zugriff nur durch das Sicherheitsbetriebssystem möglich. Ein direkter Zugriff auf das Trustlet aus dem Normalbetriebssystem heraus ist dagegen nicht möglich.

Unter dem Normalbetriebssystem implementiert und damit weitestgehend ungesichert sind (mit Ausnahme z.B. der Tastatur) so gut wie alle Peripherie-Strukturen des mobilen Endgeräts, also über den zentralen Mikroprozessor hinausgehende Strukturen des mobilen Endgeräts, da die jeweiligen Peripherie-Treiber in der unsicheren Laufzeitumgebung Normal Zone implementiert sind.

Manche Kommunikationsvorgänge der Peripherie-Strukturen mit dem Betriebssystem oder über das Betriebssystem sind sicherheitskritisch, z.B. solche, bei denen geheime Daten wie z.B. die Geheimzahl PIN verarbeitet werden, oder bei denen sicherheitsrelevante Kommandos verarbeitet werden, z.B. ein Kommando zur Bestätigung oder Veranlassung einer Zahlungsverkehrtransaktion. Für solche sicherheitskritischen Kommunikationsvorgänge wäre eine gesicherte Anbindung der Peripherie-Strukturen wünschenswert, um ein Ausspähen von Daten oder Manipulieren von Kommandos zu verhindern.

Die direkteste Möglichkeit, den Betrieb der Peripherie-Strukturen sicherer zu machen ist, die jeweiligen Peripherie-Treiber statt unter dem Normalbetriebssystem unter dem Sicherheitsbetriebssystem zu implementieren. (Der relativ kleine und kompakte Tastaturtreiber in einem mobilen Endgerät mit Mobicore als Sicherheitsbetriebssystem ist beispielsweise häufig bereits standardmäßig unter dem Sicherheitsbetriebssystem implementiert.) Dies hat allerdings zur Folge, dass sämtliche Zugriffe auf die Peripherie-Struktur zwangsweise durch das Sicherheitsbetriebssystem erfolgen müssen. Da unter dem Sicherheitsbetriebssystem für sämtliche Zugriffe aufwändige Sicherheitsmaßnahmen wie Authentisierungen und Verschlüsselungen erforderlich sind, verlangsamt die Verlagerung der Treiber vom Normalbetriebssystem in das Sicherheitsbetriebssystem den Betrieb des mobilen Endgeräts ganz erheblich. Ein erheblicher Anteil von Zugriffen auf eine Peripherie-Struktur ist aber nicht sicherheitskritisch und könnte genausogut unter dem unsicheren aber schnelleren Normalbetriebssystem laufen.

Applikationen für unterschiedlichste Anwendungszwecke, beispielsweise Zahlungsverkehrstransaktionen (Banking, Payment) oder Ticketverkäufe für Verkehrsmittel (Ticketting) oder Bonuspunkte- und Rabattsysteme (Loyalty) werden verbreitet zumindest teilweise unter Steuerung des Sicherheitsbetriebssystems, lauffähig in der gesicherten Ausführungsumgebung, implementiert. Zumindest Teile der Applikation sind dabei zusätzlich oder nur unter Steuerung des Normalbetriebssystems, lauffähig in der unsicheren Ausführungsumgebung, implementiert, insbesondere Teile der Applikation, die auf eine Interaktion mit einem Benutzer oder einer Benutzerschnittstelle des mobilen Endgeräts gerichtet sind. Sofern Kommunikation zwischen Teilen der Applikation in der gesicherten und der unsicheren Laufzeitumgebung erforderlich ist, erfolgt diese auf Betriebssystemebene über den Sicherheitstreiber, was die Kommunikation langsam macht.

Der Erfindung liegt die Aufgabe zu Grunde, ein in einem mobilen Endgerät implementierbares oder implementiertes Mikroprozessorsystem mit einer gesicherten Lauf zeitumgebung zu schaffen, das eine sichere und gleichzeitig effiziente Kommunikation zwischen der unsicheren Lauf zeitumgebung und der gesicherten Laufzeitumgebung ermöglicht.

US 2005/033972 veröffentlicht eine "Dual virtual machine and trusted platform architecture" mit Kommunication zwischen einer gesicherten virtuellen Maschine und einer ungesicherten virtuellen Maschine. "Virtual Machine Aware Communication Libraries for High Performance Computing", Wei Huang et al., Proc. 2007 ACM/IEEE Conference on Supercomputing, 10-16 Nov. 2007, Seiten 1 - 12, ISBN: 978-1-59593-764-3 veröffentlicht Kommunication zwischen zwei virtuellen Maschinen. "ARM Security Technology - Building a Secure System using Trustzone Technology", 30 April 2009, Seiten I-XII und "Mobicore - Giesecke & Devrient's Secure OS for ARM TrustZone Technology (White Paper)", January 2010, Seiten 1-8 veröffentlichen Einzelheiten von der Trustzone und Mobicore Technologien.

Die Aufgabe wird gelöst durch ein Mikroprozessorsystem nach Anspruch 1. Vorteilhafte Ausgestaltungen der Erfindung sind in den abhängigen Ansprüchen angegeben.

Das erfindungsgemäße Mikroprozessorsystem gemäß dem unabhängigen Anspruch 1 ist in einem mobilen Endgerät implementierbar oder implementiert und weist auf:
- ein Normalbetriebssystem, das zum Erzeugen und Unterhalten einer unsi-cheren Lauf zeitumgebung eingerichtet ist,
- ein Sicherheitsbetriebssystem, das zum Erzeugen und Unterhalten einer gesicherten Laufzeitumgebung eingerichtet ist, und
- eine Betriebssystem-Schnittstelle zwischen dem Normalbetriebssystem und dem Sicherheitsbetriebssystem, die dazu eingerichtet ist, Kommunikation zwischen der unsicheren Laufzeitumgebung und der gesicherten Laufzeitumgebung auf Betriebssystem-Ebene gesichert zu steuern.

Das Mikroprozessorsystem ist gekennzeichnet durch mindestens Filter-Schnittstelle, die dazu eingerichtet ist, Kommunikation zwischen der unsi-cheren Laufzeitumgebung und der gesicherten Laufzeitumgebung auf einer von der Betriebssystem-Ebene unterschiedlichen Ebene gesichert zu steuern.

Die Filter-Schnittstelle ermöglicht eine beschleunigte und dabei gesicherte Kommunikation, da durch sie neben dem Kommunikationskanal auf Betriebssystemebene ein weiterer sicherer Kommunikationskanal bereitgestellt wird, der für eine direktere Kommunikation genutzt werden kann als eine Kommunikation über den Umweg des Betriebssystems.

Daher ist gemäß Anspruch 1 ein Mikroprozessorsystem geschaffen, das eine sichere und gleichzeitig effiziente Kommunikation zwischen der unsicheren Laufzeitumgebung und der gesicherten Laufzeitumgebung ermöglicht.

Die Filter-Schnittstelle hat eine erste, zum Ablaufen in der unsicheren Laufzeitumgebung eingerichtete unsichere Teil-Filterschnittstelle und eine zweite, zum Ablaufen in der sicheren Laufzeitumgebung eingerichtete sichere Teil-Filterschnittstelle. Hierdurch kann die Filter-Schnittstelle zwischen der sicheren und der unsicheren Laufzeitumgebung vermitteln.

Gemäß einer Alternative ist als Filter-Schnittstelle eine Hardware-Filter-Schnittstelle vorgesehen, die dazu eingerichtet ist, Kommunikation zwischen der unsicheren Laufzeitumgebung und der gesicherten Laufzeitumgebung auf Hardware-Ebene gesichert zu steuern. Die sichere Kommunikation zwischen der gesicherten und der unsicheren Laufzeitumgebung kann also unmittelbar und direkt auf Hardware-Ebene und daher beschleunigt erfolgen.

Die Steuerung auf Hardware-Ebene erfolgt wahlweise als Steuerung durch direkte Ansteuerung von Hardware-Komponenten wie z.B. Peripherie-Strukturen wie Display, SIM-Karte etc. (vgl. unten), oder wahlweise als Steuerung über ein Bussystem, beispielsweise über einen I2C Bus.

Gemäß der Alternative, wonach als Filter-Schnittstelle eine Hardware-Filter-Schnittstelle vorgesehen ist, weist das Mikroprozessorsystem wahlweise weiter auf:
zumindest einen durch das Normalbetriebssystem ansteuerbaren, in der unsicheren Laufzeitumgebung lauffähigen Treiber für eine Peripherie-Struktur des mobilen Endgeräts, und einen durch das Sicherheitsbetriebssystem ansteuerbaren, in der gesicherten Laufzeitumgebung lauffähigen - vorzugsweise reduzierten - Treiber für die Peripherie-Struktur, der vorzugsweise lediglich eine Teilmenge der Funktionalitäten hat, welche der in der unsicheren Laufzeitumgebung lauffähige Treiber hat. Die Hardware-Filter-Schnittstelle ist hierbei dazu eingerichtet, Kommunikation zwischen dem in der unsicheren Laufzeitumgebung lauffähigen Treiber für eine Peripherie-Struktur und dem in der gesicherten Laufzeitumgebung lauffähigen vorzugsweise reduzierten Treiber für die Peripherie-Struktur auf Hardware-Ebene gesichert zu steuern.

Die Hardware-Filter-Schnittstelle ermöglicht also eine direkte Kommunikation von unter dem Normalbetriebssystem implementierten Treiberteilen mit unter dem Sicherheitsbetriebssystem implementierten Treiberteilen über die Hardware-Filter-Schnittstelle.

Als Peripherie-Struktur des Endgeräts ist beispielsweise vorgesehen: eine NFC-Schnittstelle (NFC-Interface), ein am Verbindungsaufbau ins Mobilfunknetz beteiligter Radio Interface Layer RIL, ein zur Authentisierung und Verschlüsselung verwendetes Sicherheitselement SE (z.B. SIM-Karte oder USIM-Karte oder Secure MicroSD-Karte oder festimplementiertes Embedded Secure Element), ein Display, insbesondere Touch-Screen-Display, eine PIN-Prüfungs-Routine, mit der die über die Tastatur eingegebene Geheimzahl PIN (Personal Identification Number) verifizierbar ist, Einwahlroutinen zur Einwahl in vom Mobilfunknetz unterschiedliche Netze wie beispielsweise das Internet (IP) bzw. virtuelle private Netzwerke (VPN), Pufferspeicher (z.B. Frame Buffer).

Wahlweise ist, sofern Treiber für mehrere Peripherie-Strukturen in dem Mikroprozessorsystem implementiert sind, für alle Peripherie-Strukturen eine gemeinsame Hardware-Schnittstelle vorgesehen, die Zugriffe zwischen der unsicheren und der gesicherten Laufzeitumgebung auf Hardware-Ebene ausschließlich zwischen den zur selben Peripherie-Struktur gehörigen Treibern ermöglicht und Zugriffe zwischen zu unterschiedlichen Peripherie-Strukturen gehörigen Treibern auf Hardware-Ebene verhindert. Dadurch, dass die direkten Hardware-Ebenen-Zugriffe nur den einander entsprechenden Treibern zur selben Peripherie-Struktur vorbehalten sind, ist ein missbräuchlicher Zugriff einer Schadsoftware, beispielsweise eines Tojaners oder dergleichen, auf den Treiber abgewehrt.

Zugriffe zwischen zu unterschiedlichen Peripherie-Strukturen gehörigen Treibern könnten höchstens über den Sicherheitstreiber auf Betriebssystemebene erfolgen, sofern diese Zugriffe gemäß einer Überprüfung durch den Sicherheitstreiber zulässig sind. Der Sicherheitstreiber würde z.B. Schadsoftware erkennen und abhalten.

Wahlweise ist die Hardware-Filter-Schnittstelle dazu eingerichtet, (z.B. in der unsicheren Laufzeitumgebung) an den Treiber für eine Peripherie-Struktur gerichtete Zugriffe auf Sicherheitsrelevanz hin zu prüfen und im Fall, dass der Zugriff als sicherheitsrelevant erkannt wird, den Zugriff an den reduzierten Treiber in der gesicherten Laufzeitumgebung zu leiten, und im Fall, dass der Zugriff als nicht sicherheitsrelevant erkannt wird, den Zugriff an den Treiber in der unsicheren Laufzeitumgebung zu leiten.

Wahlweise ist der in der gesicherten Laufzeitumgebung lauffähige Treiber für eine Peripherie-Struktur dahingehend reduziert, dass er lediglich Funktionalitäten umfasst, die zur Abarbeitung sicherheitsrelevanter Zugriffe erforderlich sind. Der in der unsicheren Laufzeitumgebung lauffähige Treiber für eine Peripherie-Struktur umfasst hingegen vorzugweise sämtliche Funktionalitäten des Treibers.

Gemäß einer weiteren Alternative ist als Filter-Schnittstelle eine Applikations-Filter-Schnittstelle vorgesehen, die dazu eingerichtet ist, Kommunikation zwischen der unsicheren Laufzeitumgebung und der gesicherten Laufzeitumgebung auf Applikations-Ebene gesichert zu steuern. Durch die Applikations-Filter-Schnittstelle wird ein direkter sicherer Kommunikationskanal auf Applikations-Ebene bereitgestellt, der eine schnellere Kommunikation ermöglicht als über den Umweg über die Betriebssystemebene und den auf Betriebssystemebene arbeitenden Sicherheitstreiber.

Das Mikroprozessorsystem weist weiter wahlweise zumindest eine Applikation auf, die zumindest teilweise durch das Normalbetriebssystem ansteuerbar und in der unsicheren Laufzeitumgebung lauffähig ist, und zumindest teilweise durch das Sicherheitsbetriebssystem ansteuerbar und in der gesicherten Laufzeitumgebung lauffähig ist. Dabei ist die Applikations-Filter-Schnittstelle dazu eingerichtet, Kommunikation zwischen der in der unsicheren Laufzeitumgebung lauffähigen zumindest teilweisen Applikation und der in der gesicherten Laufzeitumgebung lauffähigen zumindest teilweise Applikation auf Applikations-Ebene gesichert zu steuern.

Die Applikation kann beispielsweise eine Banking- oder Payment-Applikation für Zahlungsverkehrtransaktionen sein, oder eine Ticketting-Applikation für Kauf und Verwaltung von Fahrkarten für unterschiedlichste Zwecke, z.B. Verkehrsmittel. Zumindest sicherheitsrelevante Funktionalitäten der Applikation sind wahlweise unter dem Sicherheitsbetriebssystem implementiert. Ergänzende, nicht sicherheitsrelevante Funktionalitäten sind wahlweise zusätzlich oder ausschließlich unter dem Normalbetriebssystem implementiert.

Im Unterschied zu Treibern, wo der Treiber in den meisten Fällen überwiegend unter dem Normalbetriebssystem implementiert sein wird, wird bei Applikationen wie z.B. Banking-Applikationen meistens der überwiegende Teil unter dem Sicherheitsbetriebssystem implementiert sein.

Wahlweise ist, sofern mehrere Applikationen in dem Mikroprozessorsystem implementiert sind, für alle Applikationen eine gemeinsame Applikations-Filter-Schnittstelle vorgesehen, die Zugriffe zwischen der unsicheren und der gesicherten Laufzeitumgebung auf Applikations-Ebene ausschließlich zwischen den zur selben Applikation gehörigen Teilen in der unsicheren bzw. gesicherten Laufzeitumgebung ermöglicht und Zugriffe zwischen zu unterschiedlichen Applikationen gehörigen Teilen auf Applikations-Ebene verhindert. Dadurch, dass die direkten Applikations-Ebenen-Zugriffe nur den einander entsprechenden Teilen der selben Applikation vorbehalten sind, ist ein missbräuchlicher Zugriff einer Schadsoftware, beispielsweise eines Tojaners oder dergleichen, auf die Applikation abgewehrt.

Applikationszugriffe zwischen unterschiedlichen Applikationen über die Grenze zwischen der gesicherten und der unsicheren Laufzeitumgebung hinweg können nur höchstens auf Betriebssystemebene über den Sicherheitstreiber erfolgen.

Wahlweise ist die Applikations-Filter-Schnittstelle dazu eingerichtet, (z.B. in der unsicheren Laufzeitumgebung) an die Applikation gerichtete Zugriffe auf Sicherheitsrelevanz hin zu prüfen und im Fall, dass der Zugriff als sicherheitsrelevant erkannt wird, den Zugriff an die zumindest teilweise Applikation in der gesicherten Laufzeitumgebung zu leiten, und im Fall, dass der Zugriff als nicht sicherheitsrelevant erkannt wird, den Zugriff an die zumindest teilweise Applikation in der unsicheren Laufzeitumgebung zu leiten.

Die Applikations-Filter-Schnittstelle kann alternativ oder zusätzlich zur Hardware-Filter-Schnittstelle vorgesehen sein. Wahlweise sind die Applikations-Filter-Schnittstelle und die Hardware-Filter-Schnittstelle beide vorgesehen und zum Zusammenwirken eingerichtet.

Gemäß einer Weiterbildung der Erfindung ist die Filter-Schnittstelle mit einer Benutzer-Ausgabeeinrichtung, beispielsweise einem Lautsprecher, Vibrationsalarm oder dergleichen eines mobilen Endgeräts (z.B. Mobiltelefons), derart gekoppelt, dass anlässlich jedes über die Filterschnittstelle erfolgenden Zugriffs von der unsicheren Laufzeitumgebung in die gesicherte Laufzeitumgebung oder / und von der gesicherten Laufzeitumgebung in die unsichere Laufzeitumgebung, also über die Grenze zwischen sicherer und unsicherer Laufzeitumgebung hinweg, durch die Benutzer-Ausgabeeinrichtung eine für einen Benutzer des Mikroprozessors wahrnehmbare Benutzer-Meldung ausgegeben wird. Hierdurch wird der Benutzer auf jeden über die Grenze zwischen sicherer und unsicherer Laufzeitumgebung hinweg erfolgenden Zugriff aufmerksam gemacht und kann z.B. erkennen, wenn sicherheitskritische Daten eingehen und von der Filter-Schnittstelle an die gesicherte Laufzeitumgebung weitergeleitet werden oder / und wenn Daten aus der gesicherten Laufzeitumgebung an die unsichere Laufzeitumgebung ausgegeben werden. Die Benutzer-Ausgabe kann beispielsweise als Melodie gestaltet sein, die durch das mobile Endgerät ausgegeben wird.

Wahlweise werden für Zugriffe über die Grenze zwischen sicherer und unsicherer Laufzeitumgebung hinweg, einerseits von der unsicheren Laufzeitumgebung in die gesicherte Laufzeitumgebung und andererseits von der gesicherten Laufzeitumgebung in die unsichere Laufzeitumgebung, unterschiedliche, für den Benutzer unterscheidbare Benutzer-Ausgaben ausgegeben. Beispielsweise werden je nach Zugriffsrichtung, von der unsicheren Laufzeitumgebung in die gesicherte Laufzeitumgebung oder von der gesicherten Laufzeitumgebung in die unsichere Laufzeitumgebung, unterschiedliche Melodien ausgegeben.

Gemäß einer Variante wird die Benutzer-Meldung stets während des Betriebs des Mikroprozessors innerhalb der gesicherten Laufzeitumgebung betrieben. Bei dieser Variante wird also die anlässlich eines Zugriffs von der unsicheren Laufzeitumgebung in die gesicherte Laufzeitumgebung ausgegebene Benutzer-Meldung zeitlich unmittelbar nach dem Zugriff ausgegeben, um dem Benutzer mitzuteilen, dass der Betrieb nun tatsächlich in der gesicherten Laufzeitumgebung erfolgt. Anlässlich eines Zugriffs von der gesicherten Laufzeitumgebung in die unsichere Laufzeitumgebung wird bei dieser Variante die Benutzer-Meldung zeitlich unmittelbar vor dem Zugriff ausgegeben, um den Benutzer zu warnen, dass die gesicherte Laufzeitumgebung sogleich verlassen wird. Alternativ oder zusätzlich kann eine Benutzer-Meldung ausgegeben werden, nachdem durch den Programmablauf die gesicherte Laufzeitumgebung tatsächlich verlassen worden ist. Ebenso kann alternativ oder zusätzlich eine Benutzer-Meldung ausgegeben werden, bevor durch den Programmablauf die gesicherte Laufzeitumgebung betreten wird.

Im Folgenden wird die Erfindung an Hand von Ausführungsbeispielen und unter Bezugnahme auf die Zeichnung näher erläutert, in der in schematischer Darstellung zeigen:
- Fig. 1: ein Mikroprozessorsystem mit einer Applikations-Filter-Schnittstelle, gemäß einer Ausführungsform der Erfindung;
- Fig. 2: ein Mikroprozessorsystem mit einer Hardware-Filter-Schnittstelle, gemäß einer Ausführungsform der Erfindung;
- Fig. 3: ein Mikroprozessorsystem mit einer Applikations-Filter-Schnittstelle und einer Hardware-Filter-Schnittstelle, gemäß einer Ausführungsform der Erfindung.

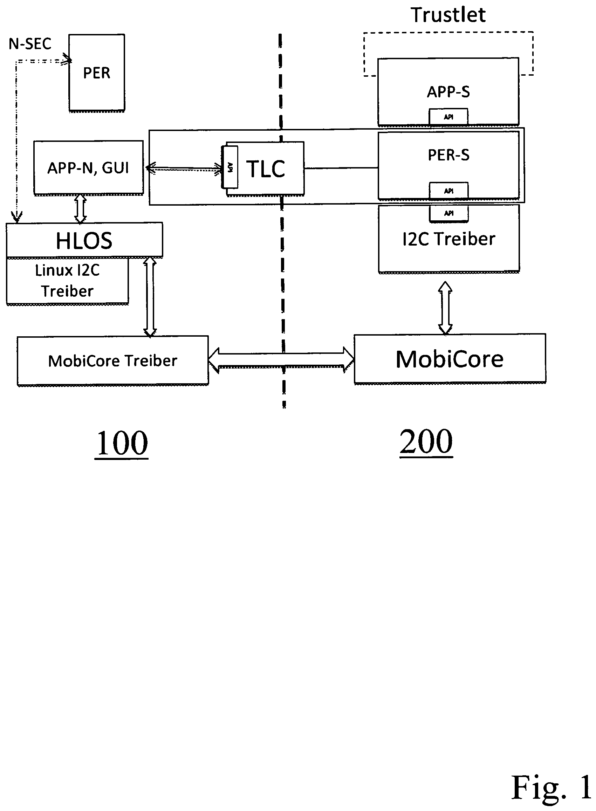

Fig. 1 zeigt ein Mikroprozessorsystem mit einer ARM-Architektur, mit einer unsicheren Laufzeitumgebung 100 und einer gesicherten Laufzeitumgebung 200, und mit einer je zum Teil in der unsicheren Laufzeitumgebung 100 und der sicheren Laufzeitumgebung 200 implementierten Applikations-Filter-Schnittstelle TLC (Trustlet Connector), gemäß einer Ausführungsform der Erfindung. Die unsichere Laufzeitumgebung 100 ist durch ein Normalbetriebssystem HLOS gesteuert. Die gesicherte Laufzeitumgebung 200 ist durch ein Sicherheitsbetriebssystem MobiCore gesteuert. Zugriffe zwischen der unsicheren Laufzeitumgebung 100 und der gesicherten Laufzeitumgebung 200 auf Betriebssystemebene erfolgen über einen Sicherheitstreiber MobiCore-Treiber. Unter dem Sicherheitsbetriebssystem MobiCore, lauffähig in der gesicherten Laufzeitumgebung 200, ist der überwiegende Teil APP-S einer Applikation APP, beispielsweise einer Zahlungsverkehr-Applikation, implementiert. Unter dem Normalbetriebssystem HLOS, lauffähig in der unsicheren Laufzeitumgebung 100, ist der restliche Teil APP-N der Applikation APP, beispielsweise Zahlungsverkehr-Applikation, implementiert. Die erfindungsgemäße Applikations-Filter-Schnittstelle TLC (Trustlet Connector) ermöglicht einen direkten Zugriff zwischen dem unter dem Sicherheitsbetriebssystem MobiCore, lauffähig in der gesicherten Laufzeitumgebung 200, implementierten Teil APP-S der Applikation APP und dem unter dem Normalbetriebssystem HLOS, lauffähig in der unsicheren Laufzeitumgebung 100, implementierten Teil APP-N der Applikation APP, unmittelbar auf Applikationsebene. Ein Treiber für eine Peripherie-Struktur PER, beispielsweise ein Touch-Screen-Display, ist gemäß Fig. 1 auf herkömmliche Weise unter dem Normalbetriebssystem HLOS implementiert und kann höchstens über den Sicherheitstreiber MobiCore Treiber mit der gesicherten Laufzeitumgebung 200 kommunizieren. Ein neuartiger, unter dem Sicherheitsbetriebssystem MobiCore implementierter reduzierter Treiber PER-S kann aus der unsicheren Laufzeitumgebung 100 heraus höchstens über den Sicherheitstreiber MobiCore Treiber erreicht werden. In der unsicheren Laufzeitumgebung 100 kommuniziert der Peripherie-Treiber PER über ein I2C Bussystem, gesteuert durch den Linux I2C Treiber, mit dem Normalbetriebssystem HLOS. In der gesicherten Laufzeitumgebung 200 kommuniziert der reduzierte Peripherie-Treiber PER-S über ein in der gesicherten Laufzeitumgebung 200 implementiertes I2C Bussystem, gesteuert durch den dortigen I2C Treiber, mit dem Sicherheitsbetriebssystem MobiCore. Kommunikation zwischen den Peripherie-Treibern PER und PER-S kann höchstens auf Betriebssystemebene über den MobiCore Treiber erfolgen.

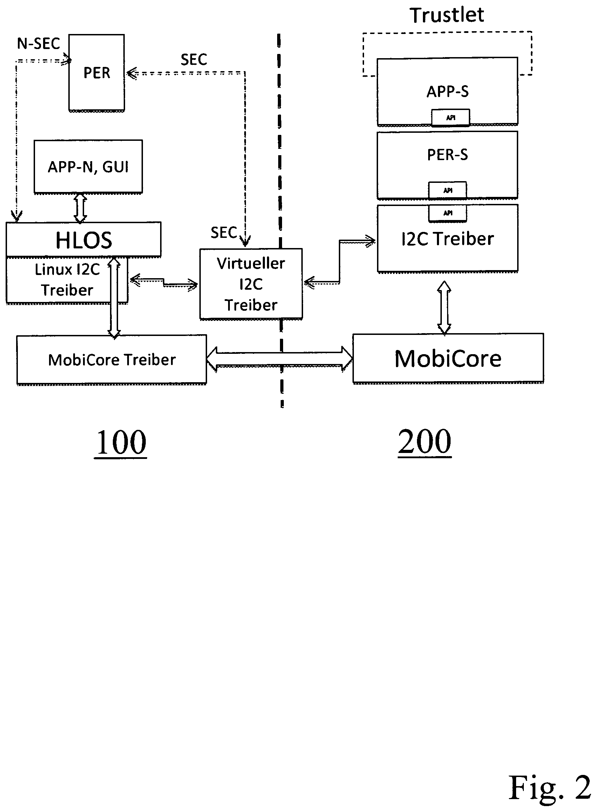

Fig. 2 zeigt ein Mikroprozessorsystem mit einer Hardware-Filter-Schnittstelle, nämlich dem virtuellen I2C Treiber, gemäß einer Ausführungsform der Erfindung. Teile mit gleicher Bezeichnung wie in Fig. 1 entsprechen den Teilen aus Fig. 1, soweit nicht hier anderweitig beschrieben. Unter dem Normalbetriebssystem HLOS ist ein Treiber für eine Peripherie-Struktur PER, beispielsweise ein Touch-Screen-Display, implementiert. Ein neuartiger reduzierter Peripherie-Treiber PER-S für die Peripherie-Struktur ist unter dem Sicherheitsbetriebssystem MobiCore implementiert. Der je zum Teil in der unsicheren Laufzeitumgebung 100 und der sicheren Laufzeitumgebung 200 implementierte virtuelle I2C Treiber (beispielhafte Hardware-Filter-Schnittstelle) ermöglicht eine gesicherte Kommunikation zwischen dem unter dem Normalbetriebssystem HLOS implementierten Peripherie-Treiber PER und dem unter dem Sicherheitsbetriebssystem implementierten reduzierten Peripherie-Treiber PER-S MobiCore auf Hardware-Ebene, genauer auf der Ebene des I2C Busses. In der unsicheren Laufzeitumgebung 100 kommuniziert der Peripherie-Treiber PER über den Linux I2C Treiber mit dem Normalbetriebssystem HLOS. In der gesicherten Laufzeitumgebung 200 kommuniziert der reduzierte Peripherie-Treiber PER-S über den dortigen I2C Treiber mit dem Sicherheitsbetriebssystem MobiCore. Die Hardware-Filter-Schnittstelle, nämlich der virtuelle I2C Treiber, stellt einen gesicherten Kommunikationskanal zwischen dem Linux I2C Treiber des Bussystems unter HLOS und dem I2C Treiber des Bussystems unter MobiCore zur Verfügung, auf einer Hardware-Ebene, die näher an der Ebene des Peripherie-Treibers ist als die Betriebssystem-Ebene. Im Ausführungsbeispiel aus Fig. 2 können die Teile APP-N, APP-S der Applikation APP nur höchstens auf Betriebssystemebene miteinander kommunizieren, nämlich über den MobiCore-Treiber.

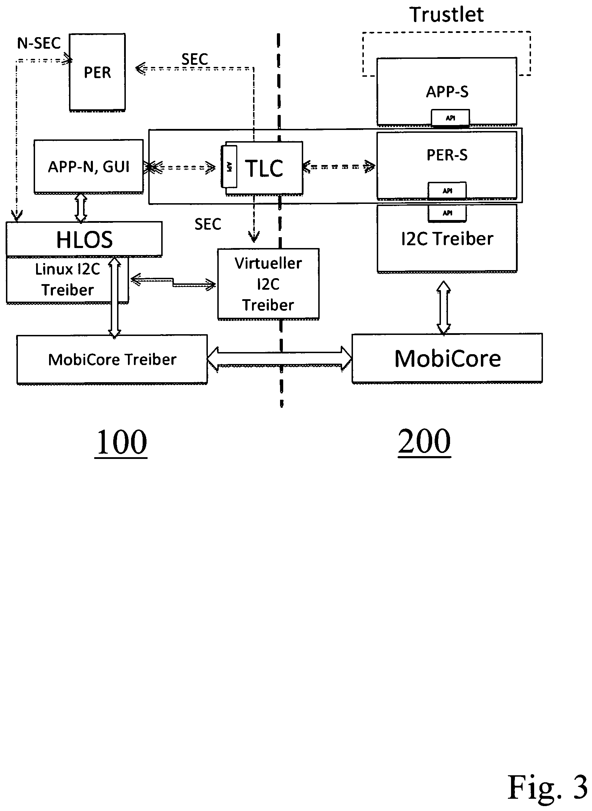

Fig. 3 zeigt ein Mikroprozessorsystem mit einer Applikations-Filter-Schnittstelle TLC und einer Hardware-Filter-Schnittstelle virtueller I2C Treiber, gemäß einer Ausführungsform der Erfindung. Fig. 3 stellt somit einerseits eine Kombination der Ausführungsformen aus Fig. 1 und Fig. 2 dar. Darüber hinaus arbeiten die Applikations-Filter-Schnittstelle TLC und die Hardware-Filter-Schnittstelle virtueller I2C Treiber zusammen. Auf Seiten der unsicheren Laufzeitumgebung 100 kommuniziert die Hardware-Filter-Schnittstelle (virtueller I2C Treiber) über das Bussystem Linux I2C Treiber mit dem Peripherie-Treiber PER. Zur gesicherten Laufzeitumgebung 200 hin kommuniziert die Hardware-Filter-Schnittstelle (virtueller I2C Treiber) mit der Applikations-Filter-Schnittstelle TLC und wechselt so von der Hardware-Ebene auf die Applikations-Ebene. Die Applikations-Filter-Schnittstelle TLC kommuniziert schließlich in die gesicherte Laufzeitumgebung 200 hinein auf Applikations-Ebene mit dem reduzierten Peripherie-Treiber PER-S.

## Patentansprüche

1. Mikroprozessorsystem, in einem mobilen Endgerät implementierbar oder implementiert, und das aufweist:
- ein Normalbetriebssystem (HLOS), das zum Erzeugen und Unterhalten einer unsicheren Laufzeitumgebung (100) eingerichtet ist,
- ein Sicherheitsbetriebssystem (MobiCore), das zum Erzeugen und Unterhalten einer gesicherten Laufzeitumgebung (200) eingerichtet ist, wobei die unsichere Laufzeitumgebung und die gesicherte Laufzeitumgebung jeweils eine Betriebssystem-Ebene, eine Hardware-Ebene und eine Applikations-Ebene aufweisen, und
- eine Betriebssystem-Schnittstelle (MobiCore-Treiber) zwischen dem Normalbetriebssystem (HLOS) und dem Sicherheitsbetriebssystem (MobiCore), die dazu eingerichtet ist, Kommunikation zwischen der unsicheren Laufzeitumgebung (100) und der gesicherten Laufzeitumgebung (200) auf Betriebssystem-Ebene gesichert zu steuern, indem Zugriffe zwischen der unsicheren Laufzeitumgebung (100) und der gesicherten Laufzeitumgebung (200) auf Betriebssystem-Ebene über einen Sicherheitstreiber erfolgen,
**gekennzeichnet durch**
mindestens eine Filter-Schnittstelle (virtueller I2C Treiber; TLC), die eine erste, zum Ablaufen in der unsicheren Laufzeitumgebung eingerichtete unsichere Teil-Filterschnittstelle und eine zweite, zum Ablaufen in der sicheren Laufzeitumgebung eingerichtete sichere Teil-Filterschnittstelle hat, und die dazu eingerichtet ist, Kommunikation zwischen der unsicheren Laufzeitumgebung (100) und der gesicherten Laufzeitumgebung (200) auf einer von der Betriebssystem-Ebene unterschiedlichen Ebene gesichert zu steuern.

2. Mikroprozessorsystem nach Anspruch 1, wobei als Filter-Schnittstelle eine Hardware-Filter-Schnittstelle (virtueller I2C Treiber) vorgesehen ist, die dazu eingerichtet ist, Kommunikation zwischen der unsicheren Laufzeitumgebung (100) und der gesicherten Laufzeitumgebung (200) auf Hardware-Ebene gesichert zu steuern.

3. Mikroprozessorsystem nach Anspruch 2, wobei die Steuerung auf Hardware-Ebene als Steuerung über ein Bussystem (I2C) erfolgt.

4. Mikroprozessorsystem nach Anspruch 2 oder 3, das weiter aufweist:
zumindest einen durch das Normalbetriebssystem (HLOS) ansteuerbaren, in der unsicheren Laufzeitumgebung (100) lauffähigen Treiber (PER) für eine
Peripherie-Struktur des mobilen Endgeräts, und
**weiter gekennzeichnet durch**
einen durch das Sicherheitsbetriebssystem (MobiCore) ansteuerbaren, in der gesicherten Laufzeitumgebung (200) lauffähigen, vorzugsweise reduzierten Treiber (PER-S) für die Peripherie-Struktur, der vorzugsweise lediglich eine Teilmenge der Funktionalitäten hat, welche der in der unsicheren Laufzeitumgebung (100) lauffähige Treiber (PER) hat,
**und dadurch, dass**
die Hardware-Filter-Schnittstelle (virtueller I2C Treiber) dazu eingerichtet ist, Kommunikation zwischen dem in der unsicheren Laufzeitumgebung (100) lauffähigen Treiber (PER) für eine Peripherie-Struktur und dem in der gesicherten Laufzeitumgebung (200) lauffähigen vorzugsweise reduzierten Treiber (PER-S) für die Peripherie-Struktur auf Hardware-Ebene gesichert zu steuern.

5. Mikroprozessorsystem nach Anspruch 4, wobei die Hardware-Filter-Schnittstelle (virtueller I2C Treiber) dazu eingerichtet ist, an den Treiber (PER, PER-S) für eine Peripherie-Struktur gerichtete Zugriffe auf Sicherheitsrelevanz hin zu prüfen und im Fall, dass der Zugriff als sicherheitsrelevant erkannt wird, den Zugriff an den vorzugsweise reduzierten Treiber (PER-S) in der gesicherten Laufzeitumgebung (200) zu leiten, und im Fall, dass der Zugriff als nicht sicherheitsrelevant erkannt wird, den Zugriff an den Treiber (PER) in der unsicheren Laufzeitumgebung (100) zu leiten.

6. Mikroprozessorsystem nach einem der Ansprüche 1 bis 5,
wobei als Filter-Schnittstelle eine Applikations-Filter-Schnittstelle (TLC) vorgesehen ist, die dazu eingerichtet ist, Kommunikation zwischen der unsicheren Laufzeitumgebung (100) und der gesicherten Laufzeitumgebung (200) auf Applikations-Ebene gesichert zu steuern.

7. Mikroprozessorsystem nach Anspruch 6, das weiter aufweist:
zumindest eine Applikation (APP),
**dadurch gekennzeichnet, dass**
die Applikation (APP) zumindest teilweise (APP-N) durch das Normalbetriebssystem (HLOS) ansteuerbar und in der unsicheren Laufzeitumgebung (100) lauffähig ist, und zumindest teilweise (APP-S) durch das Sicherheitsbetriebssystem (MobiCore) ansteuerbar und in der gesicherten Laufzeitumgebung (200) lauffähig ist,
**und dadurch, dass**
die Applikations-Filter-Schnittstelle (TLC) dazu eingerichtet ist, Kommunikation zwischen der in der unsicheren Laufzeitumgebung (100) lauffähigen zumindest teilweisen Applikation (APP-N) und der in der gesicherten Laufzeitumgebung (200) lauffähigen zumindest teilweisen Applikation (APP-S) auf Applikations-Ebene gesichert zu steuern.

8. Mikroprozessorsystem nach Anspruch 7, wobei die Applikations-Filter-Schnittstelle (TLC) dazu eingerichtet ist, an die Applikation (APP) gerichtete Zugriffe auf Sicherheitsrelevanz hin zu prüfen und im Fall, dass der Zugriff als sicherheitsrelevant erkannt wird, den Zugriff an die zumindest teilweise Applikation (APP-S) in der gesicherten Laufzeitumgebung (200) zu leiten, und im Fall, dass der Zugriff als nicht sicherheitsrelevant erkannt wird, den Zugriff an die zumindest teilweise Applikation (APP-N) in der unsicheren Laufzeitumgebung (100) zu leiten.

9. Mikroprozessorsystem nach einem der Ansprüche 1 bis 8, wobei die Filter-Schnittstelle (virtueller I2C Treiber; TLC) mit einer Benutzer-Ausgabeeinrichtung derart gekoppelt ist, dass anlässlich jedes über die Filter-Schnittstelle (virtueller I2C Treiber; TLC) erfolgenden Zugriffs von der unsicheren Laufzeitumgebung (100) in die gesicherte Laufzeitumgebung (200) oder / und von der gesicherten Laufzeitumgebung (200) in die unsichere Laufzeitumgebung (100) durch die Benutzer-Ausgabeeinrichtung eine für einen Benutzer des Mikroprozessors wahrnehmbare Benutzer-Meldung ausgegeben wird.

10. Mikroprozessorsystem nach Anspruch 9, wobei die Filter-Schnittstelle (virtueller I2C Treiber; TLC) mit der Benutzer-Ausgabeeinrichtung derart gekoppelt ist, dass für Zugriffe einerseits von der unsicheren Laufzeitumgebung (100) in die gesicherte Laufzeitumgebung (200) und andererseits von der gesicherten Laufzeitumgebung (200) in die unsichere Laufzeitumgebung (100), unterschiedliche, für den Benutzer unterscheidbare Benutzer-Ausgaben ausgegeben werden.

## Claims

1. Microprocessor system, implementable or implemented in a mobile terminal, and having:
- a normal operating system (HLOS) set up to produce and maintain an unsecured runtime environment (100),
- a security operating system (MobiCore) set up to produce and maintain a secure runtime environment (200), wherein the unsecured runtime environment and the secure runtime environment each have an operating system level, a hardware level and an application level, and
- an operating system interface (MobiCore driver) between the normal operating system (HLOS) and the security operating system (MobiCore), which is set up to control communication between the unsecured runtime environment (100) and the secure runtime environment (200) in secure fashion at operating system level by virtue of access operations between the unsecured runtime environment (100) and the secure runtime environment (200) at operating system level being effected via a security driver,
**characterized by**
at least one filter interface (virtual I2C drive; TLC) that has a first, unsecured filter interface section, set up for execution in the unsecured runtime environment, and a second, secure filter interface section, set up for execution in the secure runtime environment, and that is set up to control communication between the unsecured runtime environment (100) and the secure runtime environment (200) in secure fashion at a level different from the operating system level.

2. Microprocessor system according to Claim 1, wherein the filter interface provided is a hardware filter interface (virtual I2C driver) set up to control communication between the unsecured runtime environment (100) and the secure runtime environment (200) in secure fashion at hardware level.

3. Microprocessor system according to Claim 2, wherein the control at hardware level is effected as control via a bus system (I2C).

4. Microprocessor system according to Claim 2 or 3, further having:
at least one driver (PER), actuatable by the normal operating system (HLOS) and executable in the unsecured runtime environment (100), for a peripheral structure of the mobile terminal, and
further **characterized by**
a preferably reduced driver (PER-S), actuatable by the security operating system (MobiCore) and executable in the secure runtime environment (200), for the peripheral structure, which driver preferably has just a subset of the functionalities that the driver (PER) executable in the unsecured runtime environment (100) has,
and in that
the hardware filter interface (virtual I2C driver) is set up to control communication between the driver (PER) for a peripheral structure that is executable in the unsecured runtime environment (100) and the preferably reduced driver (PER-S) for the peripheral structure that is executable in the secure runtime environment (200) in secure fashion at hardware level.

5. Microprocessor system according to Claim 4, wherein the hardware filter interface (virtual I2C driver) is set up to check access operations directed to the driver (PER, PER-S) for a peripheral structure for relevance to security and, if the access operation is detected as relevant to security, to route the access operation to the preferably reduced driver (PER-S) in the secure runtime environment (200), and, if the access operation is detected as not relevant to security, to route the access operation to the driver (PER) in the unsecured runtime environment (100).

6. Microprocessor system according to one of Claims 1 to 5,
wherein the filter interface provided is an application filter interface (TLC) set up to control communication between the unsecured runtime environment (100) and the secure runtime environment (200) in secure fashion at application level.

7. Microprocessor system according to Claim 6, further having:
at least one application (APP),
**characterized in that**
the application (APP) is at least in part (APP-N) actuatable by the normal operating system (HLOS) and executable in the unsecured runtime environment (100), and at least in part (APP-S) actuatable by the security operating system (MobiCore) and executable in the secure runtime environment (200),
and **in that**
the application filter interface (TLC) is set up to control communication between the at least partial application (APP-N) executable in the unsecured runtime environment (100) and the at least partial application (APP-S) executable in the secure runtime environment (200) in secure fashion at application level.

8. Microprocessor system according to Claim 7, wherein the application filter interface (TLC) is set up to check access operations directed to the application (APP) for relevance to security and, if the access operation is detected as relevant to security, to route the access operation to the at least partial application (APP-S) in the secure runtime environment (200), and, if the access operation is detected as not relevant to security, to route the access operation to the at least partial application (APP-N) in the unsecured runtime environment (100).

9. Microprocessor system according to one of Claims 1 to 8, wherein the filter interface (virtual I2C driver; TLC) is coupled to a user output device such that every access operation taking place via the filter interface (virtual I2C driver; TLC) from the unsecured runtime environment (100) to the secure runtime environment (200) or/and from the secure runtime environment (200) to the unsecured runtime environment (100) prompts the user output device to output a user message perceptible to a user of the microprocessor.

10. Microprocessor system according to Claim 9, wherein the filter interface (virtual I2C driver; TLC) is coupled to the user output device such that different user outputs distinguishable by the user are output for access operations firstly from the unsecured runtime environment (100) to the secure runtime environment (200) and secondly from the secure runtime environment (200) to the unsecured runtime environment (100) .

## Revendications

1. Système de microprocesseur, mis en oeuvre ou pouvant être mis en oeuvre dans un terminal mobile, et comportant :
- un système d'exploitation normal (HLOS) conçu pour générer et maintenir un environnement d'exécution non sécurisé (100),
- un système d'exploitation de sécurité (MobiCore) conçu pour générer et maintenir un environnement d'exécution sécurisé (200), dans lequel l'environnement d'exécution non sécurisé et l'environnement d'exécution sécurisé présentent respectivement un plan de système d'exploitation, un plan matériel et un plan d'application, et
- une interface de système d'exploitation (pilote MobiCore) entre le système d'exploitation normal (HLOS) et le système d'exploitation de sécurité (MobiCore), conçue pour commander de manière sécurisée sur le plan de système d'exploitation les communications entre l'environnement d'exécution non sécurisé (100) et l'environnement d'exécution sécurisé (200) en faisant en sorte que les accès entre l'environnement d'exécution non sécurisé (100) et l'environnement d'exécution sécurisé (200) s'effectuent sur le plan de système d'exploitation par l'intermédiaire d'un pilote de sécurité,
**caractérisé par** au moins une interface de filtrage (pilote I2C virtuel ; TLC), qui comporte une première interface de filtrage partielle non sécurisée conçue pour être exécutée dans l'environnement d'exécution non sécurisé, et une seconde interface de filtrage partielle sécurisée conçue pour être exécutée dans l'environnement d'exécution sécurisé, et qui est conçue pour commander de manière sécurisée sur un plan différent du plan de système d'exploitation les communications entre l'environnement d'exécution non sécurisé (100) et l'environnement d'exécution sécurisé (200) .

2. Système de microprocesseur selon la revendication 1, dans lequel il est prévu en tant qu'interface de filtrage une interface de filtrage matérielle (pilote I2C virtuel) qui est conçue pour commander de manière sécurisée sur le plan matériel les communications entre l'environnement d'exécution non sécurisé (100) et l'environnement d'exécution sécurisé (200) .

3. Système de microprocesseur selon la revendication 2, dans lequel la commande est effectuée sous la forme d'une commande par l'intermédiaire d'un système de bus (I2C) sur le plan matériel.

4. Système de microprocesseur selon la revendication 2 ou 3, comportant en outre :
au moins un pilote (PER) pouvant être commandé par l'intermédiaire du système d'exploitation normal (HLOS) et exécutable dans l'environnement d'exécution non sécurisé (100), destiné à une structure de périphérie du terminal mobile, et
**caractérisé en outre par** un pilote (PER-S) pouvant être commandé par l'intermédiaire du système d'exploitation de sécurité (MobiCore), exécutable dans l'environnement d'exécution sécurisé (200), de préférence réduit,
destiné à la structure de périphérie, qui présente de préférence uniquement une fraction des fonctionnalités dont dispose le pilote (PER) exécutable dans l'environnement d'exécution non sécurisé (100),
et en ce que l'interface de filtrage matérielle (pilote I2C virtuel) est conçue pour commander de manière sécurisée sur le plan matériel les communications entre le pilote (PER) exécutable dans l'environnement d'exécution non sécurisé (100), destiné à une structure de périphérie, et le pilote (PER-S) exécutable dans l'environnement d'exécution sécurisé (200) et de préférence réduit, destiné à la structure de périphérie.

5. Système de microprocesseur selon la revendication 4, dans lequel l'interface de filtrage matérielle (pilote I2C virtuel) est conçue pour vérifier au niveau du pilote (PER, PER-S) la pertinence du point de vue de la sécurité d'accès destinés à une structure de périphérie et, dans le cas où l'accès est reconnu comme étant non pertinent du point de vue de la sécurité, pour acheminer l'accès au pilote de préférence réduit (PER-S) vers l'environnement d'exécution sécurisé (200) et, dans le cas où l'accès est reconnu comme n'étant pas pertinent du point de vue de la sécurité, pour acheminer l'accès au pilote (PER) vers l'environnement d'exécution non sécurisé (100).

6. Système de microprocesseur selon l'une des revendications 1 à 5,
dans lequel il est prévu en tant qu'interface de filtrage, une interface de filtrage d'application (TLC), qui est conçue pour commander de manière sécurisée sur le plan d'application les communications entre l'environnement d'exécution non sécurisé (100) et l'environnement d'exécution sécurisé (200).

7. Système de microprocesseur selon la revendication 6, comportant en outre :
au moins une application (APP),
**caractérisé en ce que** l'application (APP) peut être commandée au moins en partie (APP-N) par l'intermédiaire du système d'exploitation normal (HLOS), **en ce qu'**elle est exécutable dans l'environnement d'exécution non sécurisé (100), et **en ce qu'**elle peut être commandée au moins en partie (APP-S) par l'intermédiaire du système d'exploitation de sécurité (MobiCore) et est exécutable dans l'environnement d'exécution sécurisé (200),
et **en ce que** l'interface de filtrage d'application (TLC) est conçue pour commander de manière sécurisée sur le plan d'application les communications entre l'application (APP-N) au moins partiellement exécutable dans l'environnement d'exécution non sécurisé (100) et l'application (APP-S) au moins partiellement exécutable dans l'environnement d'exécution sécurisé (200).

8. Système de microprocesseur selon la revendication 7, dans lequel l'interface de filtrage d'application (TLC) est conçue pour vérifier la pertinence du point de vue de la sécurité d'accès destinés à l'application (APP) et en ce que, dans le cas où l'accès est reconnu comme étant pertinent du point de vue de la sécurité, pour acheminer l'accès à l'application au moins partielle (APP-S) vers l'environnement d'exécution sécurisé (200) et, dans le cas où l'accès est reconnu comme n'étant pas pertinent du point de vue de la sécurité, pour acheminer l'accès à l'application au moins partielle (APP-N) vers l'environnement d'exécution non sécurisé (100).

9. Système de microprocesseur selon l'une des revendications 1 à 8, dans lequel l'interface de filtrage (pilote I2C, virtuel ; TLC) est couplée à un dispositif de sortie d'utilisateur de manière à ce que, lors de chaque accès effectué par l'intermédiaire de l'interface de filtrage (pilote I2C virtuel ; TLC) depuis l'environnement d'exécution non sécurisé (100) vers l'environnement d'exécution sécurisé (200) ou/et depuis l'environnement d'exécution sécurisé (200) vers l'environnement d'exécution non sécurisé (100) par le dispositif de sortie d'utilisateur, un message d'utilisateur perceptible par un utilisateur du microprocesseur est fourni en sortie.

10. Système de microprocesseur selon la revendication 9, dans lequel l'interface de filtrage (pilote I2C virtuel ; TLC) est couplée au dispositif de sortie d'utilisateur de manière à ce que pour des accès effectués d'une part depuis l'environnement d'exécution non sécurisé (100) vers l'environnement d'exécution sécurisé (200) et d'autre part depuis l'environnement d'exécution sécurisé (200) vers l'environnement d'exécution non sécurisé (100), des sorties d'utilisateur pouvant être différenciées par l'utilisateur sont fournies en sortie.
